# EUROPEAN PATENT APPLICATION

(11) **EP 4 516 489 A1**
(43) Date of publication of application: **05.03.2025**
(21) Application number: 24192189.9
(22) Date of filing: 31.07.2024
(51) Int. Cl.: B29C 70/30, B29C 65/48, B29C 65/00, B29C 70/76, B29C 70/84, B29C 70/86

(54) **METHODS FOR LINERLESS FILAMENT WOUND COMPOSITE TANK MANUFACTURE**

(30) Priority: 30.08.2023 IN 202311058254
(71) Applicant: Goodrich Corporation, Charlotte, NC 28217-4578 (US)
(72) Inventor: HEGDE, Chandan Shivakumar, Bangalore (IN); PATIL, Rhushikesh, Bangalore (IN); GOVINDARAJU, Parthasarathy, Banaglore (IN); CHING, Nathaniel, Hartville, OH (US)
(74) Representative: Dehns

(57) **Abstract**

The present disclosure provides for composite tank assemblies and related methods of fabrication and use. More particularly, the present disclosure provides for linerless composite tank assemblies for aircraft or fuel or the like, and related modular manufacturing methods. The present disclosure uses a multi-section (12, 14, 16) manufacturing method and carbon fiber or equivalent material with epoxy or the like to fabricate the linerless composite tank assemblies (e.g., thermosetting epoxy; thermoplastic).

## Description

### CROSS-REFERENCE TO RELATED APPLICATIONS

This application claims the benefit of Indian Patent Application No. 202311058254 filed August 30, 2023.

### TECHNICAL FIELD

The present disclosure relates to composite tank assemblies and related methods of fabrication and use and, more particularly, to linerless composite tank assemblies for aircraft or fuel or the like, and related modular manufacturing methods.

### BACKGROUND

In general, tanks are used in aircraft to store potable water and to collect the waste from lavatories, galleys, etc. Some existing tanks use either titanium (which is a high-cost material) or steel (which is a high-density material as a material of construction). An aircraft in general will have a minimum of one potable water tank and one wastewater tank in it. As the existing tanks are generally made up of a metallic shell, such as, titanium, the material and the manufacturing costs are on the higher side and on the other side, tanks that are made of steel are relatively cheaper but are on a higher weight scale. Other existing tanks use a polymer or metallic liner that is covered with a continuous wrap of long-fiber composite. In both these cases, the design efficiency can depend on the behavior of the liner due to the difference in the material specific stiffness and strain capability between the shell and liner. Linerless tanks can be made using an inflatable bladder or washout mandrel. However, an inflatable bladder has a limited life and must be replaced periodically during production and a washout mandrel is a one-time-use tool, so both of these options increase the cost of the tank. A tank made with high-temperature thermoplastic composite generally cannot use a bladder because the temperatures required are beyond the capability of commercially available bladders.

### BRIEF DESCRIPTION

The present disclosure provides for composite tank assemblies and related methods of fabrication and use. More particularly, the present disclosure provides for linerless composite tank assemblies for aircraft or fuel or the like, and related modular manufacturing methods.

The present disclosure provides for a method for fabricating a composite tank including forming a first section and a second section, curing or consolidating the first section and the second section, providing the first and second sections as separate sections, bonding a first section mating area of the first section to a second section mating area of the second section, and forming at least one layer of composite on the bonded first and second sections, and curing the at least one layer of composite to form the composite tank.

In addition to one or more of the features described, or as an alternative to any of the foregoing embodiments, the first section comprises a first half section of the composite tank, and the second section comprises a second half section of the composite tank.

In addition to one or more of the features described, or as an alternative to any of the foregoing embodiments, wherein prior to curing or consolidating the first section and the second section, the first and second sections include a surface finish layer.

In addition to one or more of the features described, or as an alternative to any of the foregoing embodiments, the composite tank does not include a liner.

In addition to one or more of the features described, or as an alternative to any of the foregoing embodiments, wherein prior to bonding the first section mating area of the first section to the second section mating area of the second section, at least one surface of the first section or the second section is coated.

In addition to one or more of the features described, or as an alternative to any of the foregoing embodiments, the first and second sections comprise carbon fiber or glass fiber and epoxy, polybenzoxazine, polyphenylene sulfide, polyaryletherketone, or polyamide.

In addition to one or more of the features described, or as an alternative to any of the foregoing embodiments, the first and second section mating areas each include at least one step or at least one angled portion.

In addition to one or more of the features described, or as an alternative to any of the foregoing embodiments, the first section, second section, and the at least one layer of composite are formed using filament winding, automated fiber placement, or hand layup, or a combination thereof.

In addition to one or more of the features described, or as an alternative to any of the foregoing embodiments, wherein bonding the first section mating area of the first section to the second section mating area of the second section comprises adhesive bonding or fusion/welding bonding techniques.

In addition to one or more of the features described, or as an alternative to any of the foregoing embodiments, further including utilizing the composite tank on an aircraft to store potable water or waste water.

The present disclosure provides for a method for fabricating a composite tank including forming a first section and a second section and a third section, curing or consolidating the first, second and third sections, providing the first, second and third sections as separate sections, bonding a first section mating area of the first section to a first end mating area of the third section, and bonding a second section mating area of the second section to a second end mating area of the third section, and forming at least one layer of composite on the bonded first, second and third sections, and curing the at least one layer of composite to form the composite tank.

In addition to one or more of the features described, or as an alternative to any of the foregoing embodiments, the first section comprises a first endcap section of the composite tank, and the second section comprises a second endcap section of the composite tank, and the third section comprises a cylindrical section of the composite tank.

In addition to one or more of the features described, or as an alternative to any of the foregoing embodiments, wherein prior to curing or consolidating the first, second and third sections, the first, second and third sections include a surface finish layer.

In addition to one or more of the features described, or as an alternative to any of the foregoing embodiments, the composite tank does not include a liner.

In addition to one or more of the features described, or as an alternative to any of the foregoing embodiments, wherein prior to bonding the first section mating area of the first section to the first end mating area of the third section, and prior to bonding the second section mating area of the second section to the second end mating area of the third section, at least one surface of the first section or the second section or the third section is coated.

In addition to one or more of the features described, or as an alternative to any of the foregoing embodiments, the first, second and third sections comprise carbon fiber or glass fiber and epoxy, polybenzoxazine, polyphenylene sulfide, polyaryletherketone, or polyamide.

In addition to one or more of the features described, or as an alternative to any of the foregoing embodiments, the first and second section mating areas each include at least one step or at least one angled portion, and the first and second end mating areas each include at least one step or at least one angled portion.

In addition to one or more of the features described, or as an alternative to any of the foregoing embodiments, the first section, second section, third section, and the at least one layer of composite are formed using filament winding, automated fiber placement, or hand layup, or a combination thereof.

In addition to one or more of the features described, or as an alternative to any of the foregoing embodiments, wherein bonding the first section mating area of the first section to the first end mating area of the third section comprises adhesive bonding or fusion/welding bonding techniques, and bonding the second section mating area of the second section to the second end mating area of the third section comprises adhesive bonding or fusion/welding bonding techniques.

In addition to one or more of the features described, or as an alternative to any of the foregoing embodiments, further including utilizing the composite tank on an aircraft to store potable water or waste water.

The above described and other features are exemplified by the following figures and detailed description.

Any combination or permutation of embodiments is envisioned. Additional features, functions and applications of the disclosed systems, assemblies and methods of the present disclosure will be apparent from the description which follows, particularly when read in conjunction with the appended figures. All references listed in this disclosure are hereby incorporated by reference in their entireties.

### BRIEF DESCRIPTION OF THE DRAWINGS

The following figures are example embodiments wherein the like elements are numbered alike.

Features and aspects of embodiments are described below with reference to the accompanying drawings, in which elements are not necessarily depicted to scale.

Example embodiments of the present disclosure are further described with reference to the appended figures. It is to be noted that the various features, steps, and combinations of features/steps described below and illustrated in the figures can be arranged and organized differently to result in embodiments which are still within the scope of the present disclosure. To assist those of ordinary skill in the art in making and using the disclosed systems, assemblies and methods, reference is made to the appended figures, wherein:
FIG. 1 is a side perspective view of an example composite tank assembly, according to the present disclosure;
FIG. 2 is a side perspective view of an example first section of a composite tank assembly;
FIG. 3 is a side perspective view of an example second section of a composite tank assembly;
FIG. 4 is a partial cross-sectional side view of an example composite tank assembly;
FIG. 5 is a partial cross-sectional side view of another example composite tank assembly;
FIG. 6 is a partial cross-sectional side view of another example composite tank assembly;
FIG. 7 is an example flowchart showing an example method of fabricating a composite tank assembly of the present disclosure;
FIG. 8 is a side perspective view of another example first section of a composite tank assembly;
FIG. 9 is a side perspective view of another example second section of a composite tank assembly;
FIG. 10 is a side perspective view of an example third section of a composite tank assembly;
FIG. 11 is a partial cross-sectional side view of another example composite tank assembly;
FIG. 12 is a partial cross-sectional side view of another example composite tank assembly; and
FIG. 13 is another example flowchart showing an example method of fabricating a composite tank assembly of the present disclosure.

### DETAILED DESCRIPTION

The example embodiments disclosed herein are illustrative of composite tank assemblies, and systems of the present disclosure and methods/techniques thereof. It should be understood, however, that the disclosed embodiments are merely examples of the present disclosure, which may be embodied in various forms. Therefore, details disclosed herein with reference to example composite tank assemblies and associated processes/techniques of fabrication/assembly and use are not to be interpreted as limiting, but merely as the basis for teaching one skilled in the art how to make and use the systems/assemblies and/or alternative systems/assemblies of the present disclosure.

The present disclosure provides for composite tank assemblies and related methods of fabrication and use. More particularly, the present disclosure provides for linerless composite tank assemblies for aircraft or fuel or the like, and related modular manufacturing methods.

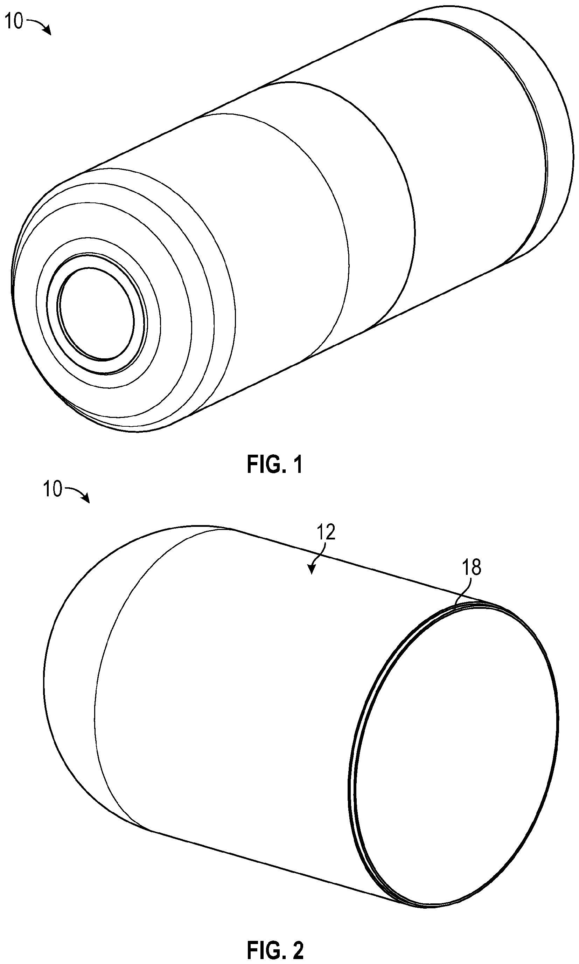

FIG. 1 is a side perspective view of an example composite tank assembly 10 of the present disclosure. In general, composite tank assembly 10 is a linerless (e.g., filament wound) composite tank assembly 10 for aircraft or fuel or the like, as discussed further below.

The present disclosure provides that linerless composite tank assemblies 10 can replace tanks made of either titanium or steel to get cost as well as weight benefits over existing tank designs.

In example embodiments, the present disclosure provides modular methods of manufacturing the composite tank assemblies 10 to ease the fabrication of linerless composite tank assemblies 10, and/or to also ease secondary operations (e.g., coatings involved to make tank assemblies 10 leakproof, food grade compatible etc.), which can otherwise be very hard to achieve for a linerless composite tank fabricated via conventional methods.

The present disclosure provides methods to replace the conventional metallic tanks fabricated either in titanium or steel by a linerless composite tank assembly 10 to realize cost and/or weight advantages. The example composite tank assemblies 10 of the present disclosure can replace these conventional tanks with filament wound linerless composite tank assemblies 10.

For the tank assemblies 10 of the present disclosure, a carbon fiber and epoxy system or method (or an equivalent) can be used as an alternative to conventional titanium/steel tanks. The present disclosure uses a multi-section manufacturing method and carbon fiber or equivalent material with epoxy or the like to fabricate the linerless composite tank assemblies 10 (e.g., thermosetting epoxy; thermoplastic).

Composite linerless tank assemblies 10 can also be referred to as pressure vessel assemblies 10, and can be used for storing propellants in rockets. Storing gaseous fuels is yet another application of such tank assemblies 10. A filament wound composite tank generally includes multiple layers of composite filaments (e.g., fiber plus thermosetting/thermoplastic resins) wound on a mandrel/tool which will become either a part of the tank or will be expended once the winding process is complete. The winding of filaments can be at certain angle based on the strength requirement to store the liquid at certain levels of pressure. Filaments wound at an angle are called helical layers, whereas filaments wound at 90-degrees to the central axis are called hoop layers.

The present disclosure also provides to fabricate the tank assemblies 10 in modules, which will not only ease the fabrication of the linerless tank assembly 10, but also as noted above, can help to ease the process of coating the inner side of the tank assembly 10.

The present disclosure provides methods to wind linerless composite tank assemblies 10 without a liner. The tank assemblies 10 can have coating compatibility to store fluids (e.g., food grade, wastewater solids content and effluents like nitrogen, phosphorus, etc.).

In example embodiments and as shown in FIGS. 2-6, the composite tank assembly 10 can include a first section 12 and a second section 14. In other embodiments and as discussed further below, composite tank assembly 10 can also include a third section 16.

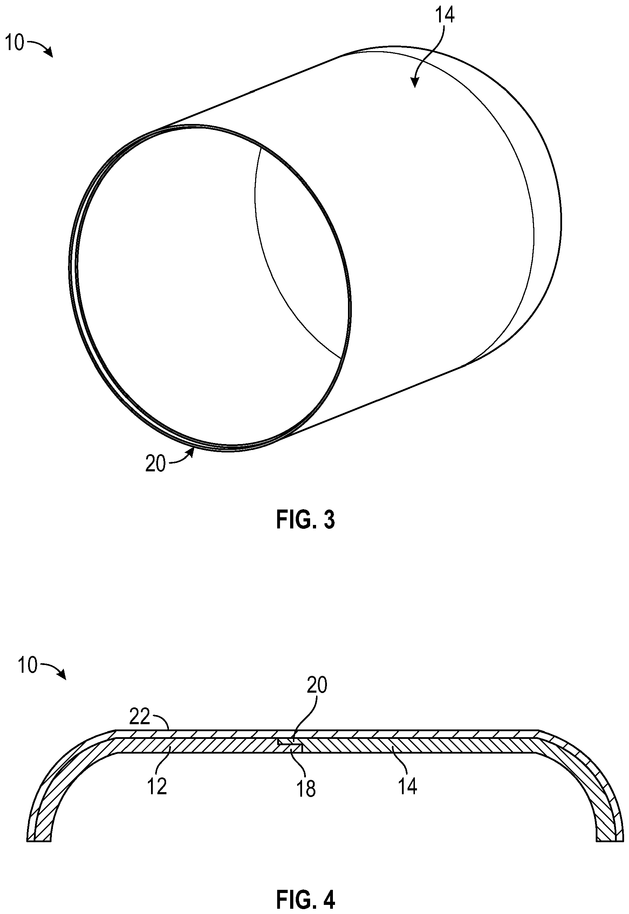

As shown in FIGS. 2-6, the first section 12 can include a first section mating area 18, and the second section 14 can include a second section mating area 20. In an embodiment and as shown in FIG. 4, the first section mating area 18 can include one step that is cut or fabricated into first section 12, and the second section mating area 20 can include one step that is cut or fabricated into second section 14.

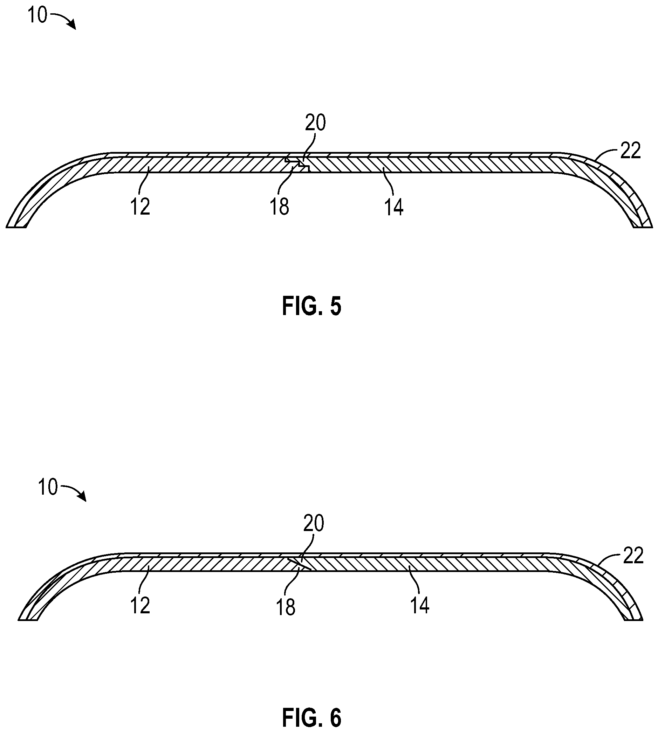

In another embodiment and as shown in FIG. 5, the first section mating area 18 can include two steps that are cut or fabricated into first section 12, and the second section mating area 20 can include two steps that are cut or fabricated into second section 14. It is noted that first section mating area 18 can include any suitable number of steps that are cut or fabricated into first section 12, and that second section mating area 20 can include any suitable number of steps that are cut or fabricated into second section 14.

In another embodiment and as shown in FIG. 6, the first section mating area 18 can include an angled portion that is cut or fabricated into first section 12, and the second section mating area 20 can include an angled portion that is cut or fabricated into second section 14. It is noted that first section mating area 18 can include any suitable number of angled portions that are cut or fabricated into first section 12, and that second section mating area 20 can include any suitable number of angled portions that are cut or fabricated into second section 14.

In example embodiments, the tank assembly 10 is split at the center of tank assembly 10 into the first section 12 on one side, and the second section 14 on the other side of the tank assembly 10.

For example and during initial fabrication, the tank assembly 10 can first be filament wound as a thin shell with or without a surface finish ply/layer using a hard mandrel, and then cut into first section 12 and second section 14. As an alternative, the first and second sections 12, 14 can be formed separately using hard mandrels. A hard mandrel has the advantage of being reusable many times to save cost. For example and without limitation, the forming can be done with hand layup, filament winding, automated fiber placement, stamping, or a combination of these processes.

The first and second sections 12, 14 can then be machined or the like to prepare the desired first section mating area 18 and second section mating area 20. It is noted that fittings or the like can be installed into the first and second sections 12, 14.

It is noted that coatings (e.g., polymer coatings), if desired, can be applied on the inner surface and/or exterior surfaces of the first and/or second sections 12, 14 (e.g., based on the application needs of finished tank assembly 10). It is noted that the coatings can be applied prior to joining sections 12 and 14 together.

The first and second sections 12, 14 can then be bonded together (e.g., radially bonded together via bonding (adhesive bonding; fusion/welding bonding techniques; etc.) at the center of tank assembly 10) at the intersection/mating of the first section mating area 18 to the second section mating area 20, thereby forming a single unit of tank assembly 10.

In some embodiments and after bonding first and second sections 12, 14 together, one or more layers 22 of composite filaments (e.g., with a surface finish ply) can be wound on top of the bonded first and second sections 12, 14 and then cured to ensure that the structural strength of tank assembly 10 is not compromised due to bonding first and second sections 12, 14 together. The layers 22 need not cover the entire assembly 10 but may just reinforce the joint between first and second sections 12 and 14.

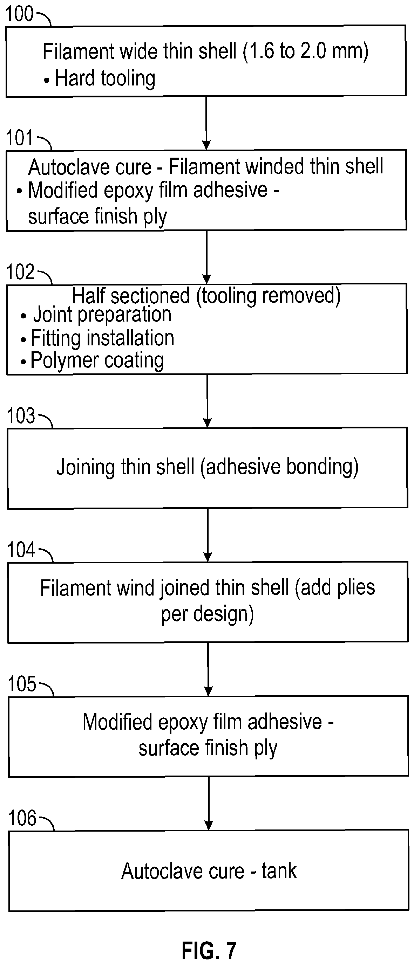

FIG. 7 is an example flowchart showing an example method of fabricating a composite tank assembly 10 of the present disclosure.

For example and during initial fabrication and at step 100 of FIG. 7, the tank assembly 10 can first be filament wound as a thin shell (e.g., about 1.6 to 2.0 mm thickness) using a hard mandrel. At step 101, the thin shell of assembly 10 is cured or consolidated. Step 101 is optional or can be a partial cure or consolidation in an optimized process. It is noted that step 101 can optionally include a surface finish ply (e.g., modified epoxy film adhesive) on the inside surface of the thin shell of assembly 10.

At step 102, the thin shell of assembly 10 is half-sectioned into first section 12 and second section 14, and the tooling is removed. As an alternative and as noted above, the first and second sections 12, 14 can be laid up separately using hard mandrels using hand layup, filament winding, or automated fiber placement.

At step 102, the first and second sections 12, 14 can have the first and second mating areas 18, 20 prepared, and fittings may be installed. Coatings (e.g., polymer coatings) can be applied on the inner surface and/or exterior surfaces of the first and/or second sections 12, 14. At step 103, the first and second sections 12, 14 can then be bonded together (e.g., via adhesive bonding; fusion/welding bonding techniques; etc.).

At step 104 and after bonding first and second sections 12, 14 together, one or more layers 22 of composite filaments (e.g., with a surface finish ply at step 105) can be wound on top of the bonded first and second sections 12, 14 and then cured or consolidated at step 106 (e.g., to ensure that the structural strength of tank assembly 10 is not compromised due to bonding first and second sections 12, 14 together).

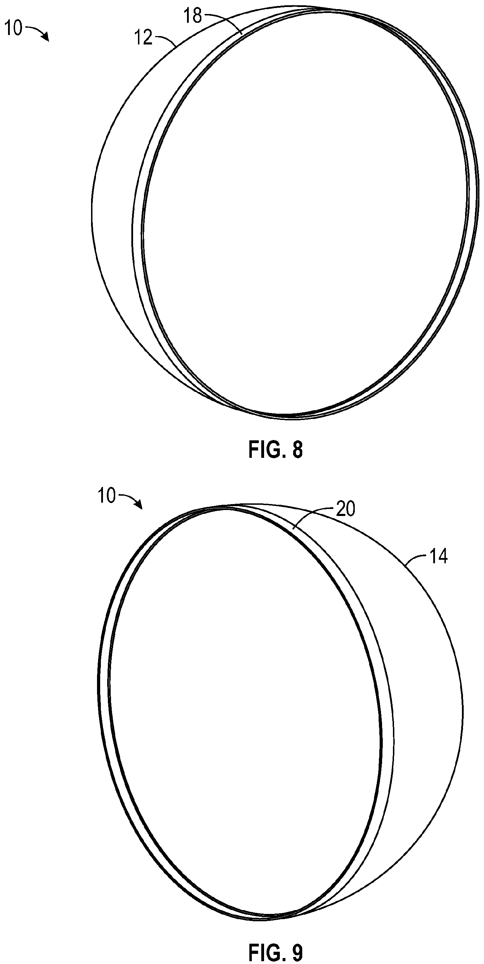

In example embodiments and as shown in FIGS. 8-12, the composite tank assembly 10 can include a first section 12, a second section 14 and a third section 16.

The first section 12 can include a first section mating area 18, and the second section 14 can include a second section mating area 20. The first section mating area 18 can include one step that is cut or fabricated into first section 12, and the second section mating area 20 can include one step that is cut or fabricated into second section 14.

In another embodiment and as shown in FIG. 9, the first section mating area 18 can include two steps that are cut or fabricated into first section 12, and the second section mating area 20 can include two steps that are cut or fabricated into second section 14. It is noted that first section mating area 18 can include any suitable number of steps that are cut or fabricated into first section 12, and that second section mating area 20 can include any suitable number of steps that are cut or fabricated into second section 14.

It is also noted that the first section mating area 18 can include at least one angled portion that is cut or fabricated into first section 12, and the second section mating area 20 can include at least one angled portion that is cut or fabricated into second section 14.

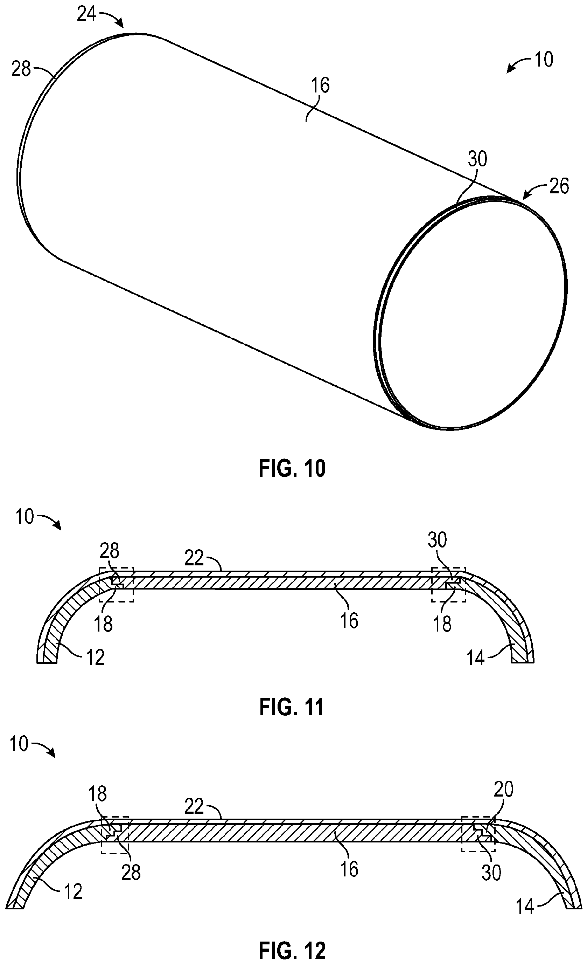

As shown in FIG. 10, the third section 16 extends from a first end 24 to a second end 26. The first end 24 of third section 16 includes a first end mating area 28, and the second end 26 of third section 16 includes a second end mating area 30.

The first end mating area 28 can include at least one step that is cut or fabricated into third section 16, and the second end mating area 30 can include at least one step that is cut or fabricated into third section 16. It is also noted that the first end mating area 28 can include at least one angled portion that is cut or fabricated into third section 16, and the second end mating area 30 can include at least one angled portion that is cut or fabricated into third section 16.

In example embodiments, the tank assembly 10 is split into the first section 12 at one end (e.g., in the form of an end cap 12), the second section 14 at the other end (e.g., in the form of an end cap 14), and the third section 16 (e.g., in the form of a cylinder 16 or the like) of the tank assembly 10.

For example and during initial fabrication, the tank assembly 10 can first be filament wound as a thin shell with or without a surface finish ply using a hard mandrel, and then cut into first section 12, second section 14 and third section 16. As an alternative, the first, second and third sections 12, 14, 16 can be formed/filament wound (and/or molded) separately using hard mandrels. For some materials, stamping, automated fiber placement, or hand layup may be more suitable for the end sections 12 and 14 while filament winding is more suitable for the middle section 16.

The first, second and third sections 12, 14, 16 can then be machined or the like to prepare the desired first section mating area 18, the second section mating area 20, the first end mating area 28 and the second end mating area 30. It is noted that fittings or the like can be installed into the first, second and/or third sections 12, 14, 16.

It is noted that coatings (e.g., polymer coatings), if desired, can be applied on the inner surface and/or exterior surfaces of the first, second and/or third sections 12, 14, 16 (e.g., based on the application needs of finished tank assembly 10). It is noted that the coatings can be applied prior to joining sections 12, 14, 16 together.

The first, second and third sections 12, 14, 16 can then be bonded together (e.g., radially bonded together via bonding, such as adhesive bonding; fusion/welding bonding techniques; etc.) at the intersection/mating of (i) the first section mating area 18 to the first end mating area 28, and (ii) the second section mating area 20 to the second end mating area 30, thereby forming a single unit of tank assembly 10.

In some embodiments and after bonding first, second and third sections 12, 14, 16 together, one or more layers 22 of composite filaments (e.g., with a surface finish ply) can be wound on top of the bonded first, second and third sections 12, 14, 16 and then cured to ensure that the structural strength of tank assembly 10 is not compromised due to bonding first, second and third sections 12, 14, 16 together. The layers 22 need not cover the entire assembly 10 but may cover just the joints between sections 12, 14, and 16.

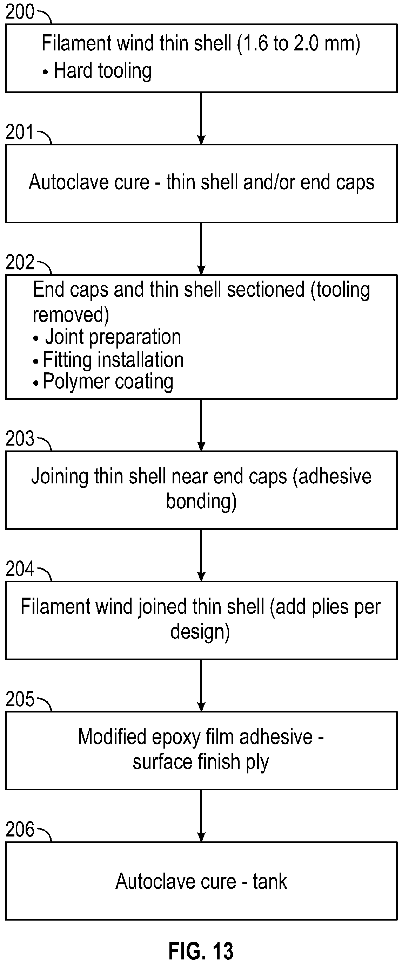

FIG. 13 is an example flowchart showing another example method of fabricating a composite tank assembly 10 of the present disclosure.

For example and during initial fabrication and at step 200 of FIG. 13, the tank assembly 10 can first be filament wound as a thin shell (e.g., about 1.6 to 2.0 mm thickness) using a hard mandrel. At step 201, the thin shell of assembly 10 is cured or consolidated. It is noted that step 201 can optionally include a surface finish ply (e.g., modified epoxy film adhesive) on the inner surface of the thin shell of assembly 10.

At step 202, the thin shell of assembly 10 is sectioned into first section 12 and second section 14 and third section 16, and the tooling is removed. At step 202, the first, second and third sections 12, 14, 16 can have the mating areas 18, 20, 28 and 30 prepared, and fittings may be installed. Coatings (e.g., polymer coatings) can be applied on the inner surface and/or exterior surfaces of the first, second and/or third sections 12, 14, 16. At step 203, the first, second and third sections 12, 14, 16 can then be bonded together (e.g., via adhesive bonding; fusion/welding bonding techniques; etc.).

At step 204 and after bonding first, second and third sections 12, 14, 16 together, one or more layers 22 of composite filaments (e.g., with a surface finish ply at step 205) can be wound on top of the bonded first, second and third sections 12, 14, 16 and then cured or consolidated at step 206 (e.g., to ensure that the structural strength of tank assembly 10 is not compromised due to bonding first, second and third sections 12, 14, 16 together).

It is noted that the methods of fabrication of tank assembly 10 of the present disclosure also ease the coating of the inner layer of the tank assembly 10 (e.g., with food grade coatings or any other coatings, as necessary). Moreover, the linerless composite tank assemblies 10 have a weight advantage as the conventional liner (generally metallic) can be eliminated, and the example tank assemblies 10 also have a cost advantage as well. It is noted that multiple iterations of stress analysis can performed to understand the behavior of the tank assembly 10 under burst and vacuum pressure for various ply angles.

It is noted that one can design the angle of plies, sequence of plies (e.g., first hoop layer, next few helical layers at an angle (+/- 20° to +/- 60°) and again the hoop layer and so on), to develop the desired thickness of the tank assembly 10 that is necessary to ensure the cylinder/tank assembly 10 withstands the pressure that is defined as part of design requirements. This can involve multiple stress analysis iterations to come up with an optimum design parameters such as ply angles, ply sequence and/or thickness.

As such, the modular methods of manufacturing of assemblies 10 of the present disclosure not only eases the fabrication of the linerless tank assemblies 10, but also aids in applying coatings on the inner surfaces which can be difficult and tiresome when fabricated conventionally.

There are many benefits of the assemblies 10, systems and methods of the present disclosure, including, without limitation cost benefits; weight benefits (e.g., about 30 percentage) and thus reduced carbon emissions, tank assemblies 10 are corrosion free and hence no leaks over prolonged exposure to liquids, dependency of structural efficiency on liner material employed in the conventional tanks is avoided and/or utilizes an advanced manufacturing process.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

The ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof is open and includes any combination comprising at least one of the listed components or properties optionally together with a like or equivalent component or property not listed.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Although the assemblies, systems and methods of the present disclosure have been described with reference to example embodiments thereof, the present disclosure is not limited to such example embodiments and/or implementations. Rather, the assemblies, systems and methods of the present disclosure are susceptible to many implementations and applications, as will be readily apparent to persons skilled in the art from the disclosure hereof. The present disclosure expressly encompasses such modifications, enhancements and/or variations of the disclosed embodiments. Since many changes could be made in the above construction and many widely different embodiments of this disclosure could be made without departing from the scope thereof, it is intended that all matter contained in the drawings and specification shall be interpreted as illustrative and not in a limiting sense. Additional modifications, changes, and substitutions are intended in the foregoing disclosure. Accordingly, it is appropriate that the appended claims be construed broadly and in a manner consistent with the scope of the disclosure.

## Claims

1. A method for fabricating a composite tank comprising:
forming a first section (12) and a second section (14);
curing or consolidating the first section (12) and the second section (14);
providing the first and second sections as separate sections;
bonding a first section mating area of the first section (12) to a second section mating area of the second section (14); and
forming at least one layer of composite on the bonded first and second sections, and curing the at least one layer of composite to form the composite tank.

2. The method of claim 1, wherein the first section (12) comprises a first half section of the composite tank, and the second section (14) comprises a second half section of the composite tank.

3. The method of claim 1 or 2, wherein prior to curing or consolidating the first section (12) and the second section (14), the first and second sections include a surface finish layer.

4. The method of any preceding claim, wherein the composite tank does not include a liner.

5. The method of any preceding claim, wherein prior to bonding the first section mating area of the first section (12) to the second section mating area of the second section (14), at least one surface of the first section (12) or the second section (14) is coated.

6. The method of any preceding claim, wherein the first and second sections comprise carbon fiber or glass fiber and epoxy, polybenzoxazine, polyphenylene sulfide, polyaryletherketone, or polyamide.

7. The method of any preceding claim, wherein the first and second section mating areas each include at least one step or at least one angled portion.

8. The method of any preceding claim, wherein the first section (12), second section (14), and the at least one layer of composite are formed using filament winding, automated fiber placement, or hand layup, or a combination thereof.

9. The method of any preceding claim, wherein bonding the first section mating area of the first section (12) to the second section mating area of the second section (14) comprises adhesive bonding or fusion/welding bonding techniques.

10. The method of any preceding claim, further comprising utilizing the composite tank on an aircraft to store potable water or waste water.

11. A method for fabricating a composite tank comprising:
forming a first section (12) and a second section (14) and a third section (16);
curing or consolidating the first, second and third sections;
providing the first, second and third sections as separate sections;
bonding a first section mating area of the first section (12) to a first end mating area of the third section (16), and bonding a second section mating area of the second section (14) to a second end mating area of the third section (16); and
forming at least one layer of composite on the bonded first, second and third sections, and curing the at least one layer of composite to form the composite tank.

12. The method of claim 11, wherein the first section (12) comprises a first endcap section of the composite tank, and the second section (14) comprises a second endcap section of the composite tank, and the third section (16) comprises a cylindrical section of the composite tank.

13. The method of claim 11 or 12, wherein prior to curing or consolidating the first, second and third sections, the first, second and third sections include a surface finish layer.

14. The method of any of claims 11-13, wherein the composite tank does not include a liner.

15. The method of any of claims 11-14, wherein prior to bonding the first section mating area of the first section (12) to the first end mating area of the third section (16), and prior to bonding the second section mating area of the second section (14) to the second end mating area of the third section (16), at least one surface of the first section (12) or the second section (14) or the third section (16) is coated; and/or wherein the first, second and third sections comprise carbon fiber or glass fiber and epoxy, polybenzoxazine, polyphenylene sulfide, polyaryletherketone, or polyamide; and/or wherein the first and second section mating areas each include at least one step or at least one angled portion, and the first and second end mating areas each include at least one step or at least one angled portion; and/or wherein the first section (12), second section (14), third section (16), and the at least one layer of composite are formed using filament winding, automated fiber placement, or hand layup, or a combination thereof; and/or wherein bonding the first section mating area of the first section (12) to the first end mating area of the third section (16) comprises adhesive bonding or fusion/welding bonding techniques, and bonding the second section mating area of the second section (14) to the second end mating area of the third section (16) comprises adhesive bonding or fusion/welding bonding techniques; and/or further comprising utilizing the composite tank on an aircraft to store potable water or waste water.
